# EUROPEAN PATENT SPECIFICATION

(11) **EP 3 771 892 B1**
(45) Date of publication and mention of the grant of the patent: **12.06.2024**
(21) Application number: 20170524.1
(22) Date of filing: 21.04.2020
(51) Int. Cl.: G01J 3/26, G02B 5/28, G02B 5/20, G01J 3/12, G01J 3/28

(54) **OPTICAL FILTER AND SPECTROMETER INCLUDING THE SAME**
OPTISCHER FILTER UND SPEKTROMETER DAMIT
FILTRE OPTIQUE ET SPECTROMÈTRE LE COMPRENANT

(30) Priority: 30.07.2019 KR 20190092651
(43) Date of publication of application: 03.02.2021
(73) Proprietor: Samsung Electronics Co., Ltd., Gyeonggi-do 16677 (KR)
(72) Inventor: KIM, Hyochul, 16678 Gyeonggi-do (KR); ROH, Younggeun, 16678 Gyeonggi-do (KR); PARK, Yeonsang, 16678 Gyeonggi-do (KR)
(74) Representative: Grünecker Patent- und Rechtsanwälte PartG mbB

(56) References cited:
- WO-A1-2014/120686
- US-A- 5 726 805
- US-A1- 2018 335 557
- Nn: "Fundamental Optics Gaussian Beam Optics Optical Specifications Material Properties Optical Coatings", , 24 February 2012 (2012-02-24), pages 537-542, XP055301957, Retrieved from the Internet: URL:https://marketplace.idexop.com/Fronten d/PDFs/interference_filter_coatings.pdf [retrieved on 2016-09-13]

## Description

### BACKGROUND

### 1. Field

Example embodiments of the present disclosure relate to optical filters and spectrometers including the optical filters.

### 2. Description of Related Art

A spectrometer according to the related art includes various optical devices. As such, the spectrometer may be bulky and heavy. Recently, there has been a need to reduce the size of a spectrometer, and accordingly, research into simultaneous implementation of an integrated circuit and an optical device on one semiconductor chip has been conducted. Optical filters based on resonant cavities are for example known from US 5 726 805 A or US 2018/335557 A1.

### SUMMARY

One or more example embodiments provide optical filters and spectrometers including the optical filters.

Additional aspects will be set forth in part in the description which follows and, in part, will be apparent from the description, or may be learned by practice of the example embodiments.

According to an aspect of an example embodiment, there is provided an optical filter according to claim 1. Further preferred embodiments are described in the dependent claims.

### BRIEF DESCRIPTION OF THE DRAWINGS

The above and/or other aspects, features, and advantages of example embodiments of the disclosure will be more apparent from the following description taken in conjunction with the accompanying drawings, in which:
FIG. 1 is a perspective view of a spectrometer according to an example embodiment;
FIG. 2 is a cross-sectional view of a bandpass filter in an optical filter of FIG. 1;
FIG. 3 is a diagram showing transmission spectrum of a bandpass filter according to the related art and transmission spectrum of the bandpass filter of FIG. 2;
FIG. 4 is a cross-sectional view of a bandpass filter according to another example embodiment;
FIG. 5 is a cross-sectional view of a bandpass filter according to another example embodiment;
FIG. 6 is a cross-sectional view of an optical filter according to another example embodiment;
FIG. 7A is a diagram showing transmission spectrums of light transmitting through a first filter array (blue filter array) of FIG. 6;
FIG. 7B is a diagram showing transmission spectrums of light transmitting through a second filter array (green filter array) of FIG. 6;
FIG. 7C is a diagram showing transmission spectrums of light transmitting through a third filter array (red filter array) of FIG. 6;
FIG. 8 is a diagram showing transmission spectrums of light transmitting through first, second, and third color filters of FIG. 6;
FIG. 9A is a diagram of transmission spectrums of light transmitting through the first color filter and the first filter array of FIG. 6;
FIG. 9B is a diagram of transmission spectrums of light transmitting through the second color filter and the second filter array of FIG. 6;
FIG. 9C is a diagram of transmission spectrums of light transmitting through the third color filter and the third filter array of FIG. 6;
FIG. 10 is a cross-sectional view of an optical filter according to another example embodiment;
FIG. 11 is a diagram showing an example of a wideband filter of FIG. 10;
FIG. 12 is a diagram showing another example of the wideband filter of FIG. 10;
FIG. 13A is a diagram of transmission spectrums of light transmitting through the first filter array of FIG. 10;
FIG. 13B is a diagram of transmission spectrums of light transmitting through the second filter array of FIG. 10;
FIG. 13C is a diagram of transmission spectrums of light transmitting through the third filter array of FIG. 10;
FIG. 14 is a diagram showing transmission spectrums of light transmitting through first, second, and third wideband filters of FIG. 10;
FIG. 15A is a diagram of transmission spectrums of light transmitting through the first wideband filter and the first filter array of FIG. 10;
FIG. 15B is a diagram of transmission spectrums of light transmitting through the second wideband filter and the second filter array of FIG. 10; and
FIG. 15C is a diagram of transmission spectrums of light transmitting through the third wideband filter and the third filter array of FIG. 10.

### DETAILED DESCRIPTION

Reference will now be made in detail to example embodiments of which are illustrated in the accompanying drawings, wherein like reference numerals refer to like elements throughout. In this regard, the example embodiments may have different forms and should not be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

When a layer, a film, a region, or a panel is referred to as being "on" another element, it may be directly on the other layer or substrate, or intervening layers may also be present. An expression used in the singular encompasses the expression of the plural, unless it has a clearly different meaning in the context. Throughout the specification, when a portion "includes" an element, another element may be further included, rather than excluding the existence of the other element, unless otherwise described.

As used herein, in particular, terms such as "the" and demonstratives similar thereto used herein may be to indicate both the singular and the plural. Also, the steps of all methods described herein may be performed in any suitable order unless otherwise indicated herein or otherwise clearly contradicted by context. The present disclosure is not limited to the described order of the steps. The use of any and all examples, or example language provided herein, is intended merely to better illuminate the present disclosure and does not pose a limitation on the scope of the present disclosure unless otherwise claimed.

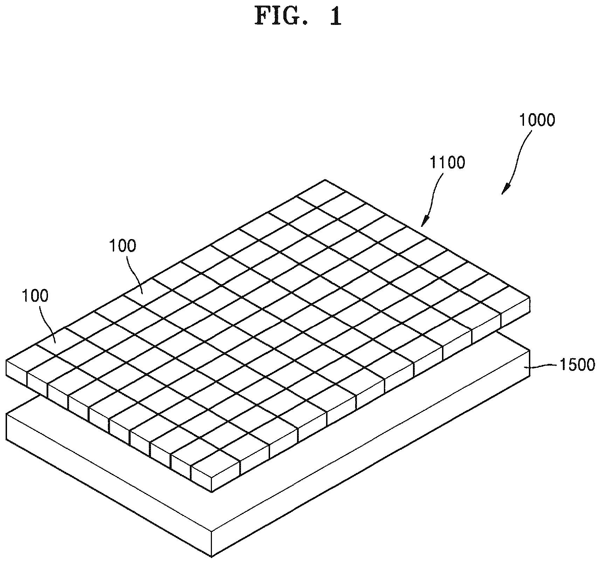

FIG. 1 is a perspective view of a spectrometer 1000 according to an example embodiment.

Referring to FIG. 1, the spectrometer 1000 includes a sensing device 1500 and an optical filter 1100 provided on the sensing device 1500. The optical filter 1100 may include a plurality of bandpass filters 100 arranged two-dimensionally. However, embodiments are not limited thereto. For example, the plurality of bandpass filters 100 may be arranged one-dimensionally.

Each of the plurality of bandpass filters 100 may transmit a certain wavelength band of light. Here, the plurality of bandpass filters 100 may have different center wavelengths of light from one another. However, embodiments are not limited thereto. For example, some of the plurality of bandpass filters 100 may have the same center wavelength of light as one another.

The sensing device 1500 may receive light that has passed through the optical filter 1100 and convert the light into an electric signal. The light incident into the optical filter 1100 passes through the plurality of bandpass filters 100, and the light having different center wavelengths passing through the bandpass filters 100 reaches pixels of the sensing device 1500. The sensing device 1500 converts the light incident to the pixels into electric signals to perform spectroscopy on the light incident to the optical filter 1100. The sensing device 1500 may include, for example, an image sensor such as a charge-coupled device (CCD), a complementary metal oxide semiconductor (CMOS) image sensor, etc., or a photodiode. However, embodiments are not limited thereto.

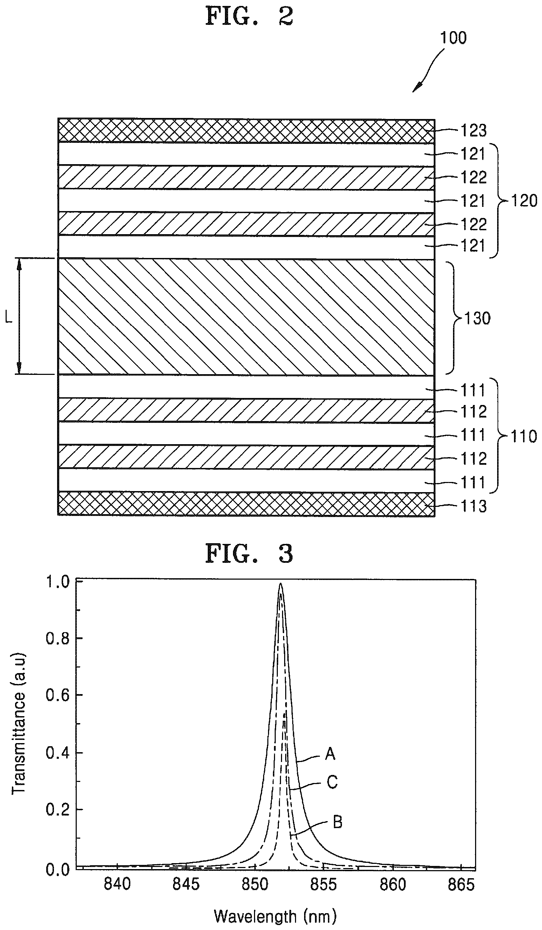

FIG. 2 is a cross-sectional view of a bandpass filter 100 of the optical filter 1100 of FIG. 1.

Referring to FIG. 2, the bandpass filter 100 transmits a wavelength band of light including a certain center wavelength and has a Fabry-Perot structure, in which a resonant layer is provided between two reflective layers. A center wavelength and a wavelength band of the light passing through a bandpass filter may be determined according to reflection bands of the reflective layers and characteristics of a cavity layer.

For example, the bandpass filter 100 includes a first Bragg reflective layer 110 and a second Bragg reflective layer 120, and a cavity layer 130 between the first and second Bragg reflective layers 110 and 120, where the first and second Bragg reflective layers 110 and 120 are spaced apart from each other.

The cavity layer 130 may be a resonant layer, and may include a semiconductor material having a predetermined refractive index. For example, the cavity layer 130 may include silicon or silicon oxide. However, embodiments are not limited thereto. For example, the cavity layer 130 may include various materials according to design conditions such as a wavelength of incident light, etc.

When the light is incident to the cavity layer 130 from an upper surface of the bandpass filter 100, the light reciprocates in the cavity layer 130 between the first and second Bragg reflective layers 110 and 120 and causes constructive interference and destructive interference. In addition, the light having a certain center wavelength that satisfies the constructive interference condition is output from a lower surface of the bandpass filter 100.

In general, an intensity of the light emitted from the bandpass filter 100 may vary depending on an incident angle of the light incident to the bandpass filter 100. In order to reduce dependency of the light on the incident angle, the cavity layer 130 may have a thickness equal to or greater than a predetermined thickness according to the embodiment.

For example, the cavity layer 130 may have a thickness L that is greater than λ/n, where, λ denotes a center wavelength of the bandpass filter 100 and n denotes an effective refractive index of the cavity layer 130. As described above, when the thickness L of the cavity layer 130 is greater than λ/n, the light of a desired intensity having a certain center wavelength may be transmitted even when the light is incident to the bandpass filter 100 at various angles.

Each of the first and second Bragg reflective layers 110 and 120 respectively provided on lower and upper surfaces of the cavity layer 130 may be a distributed Bragg reflector (DBR). For example, each of the first and second Bragg reflective layers 11O and 120 may include three material layers having different refractive indices from one another.

For example, the first Bragg reflective layer 110 may have a structure, in which at least one first material layer 111, at least one second material layer 112, and at least one third material layer 113 are sequentially stacked in a vertical direction. FIG. 2 shows an example of a structure of the first Bragg reflective layer 110, in which three first material layers 111 and two second material layers 112 are alternately stacked in the vertical direction on an upper surface of the third material layer 113. However, the number and arrangement of the first to third material layers 111, 112, and 113 may be variously modified.

The first to third material layers 111, 112, and 113 may have materials having different refractive indices from one another. For example, the first material layer 111 may have a maximum refractive index and the second material layer 112 may have a minimum refractive index. In addition, a refractive index of the third material layer 113 may be less than that of the first material layer 111 and greater than that of the second material layer 112.

For example, the first material layer 111 may include silicon and the second material layer 112 may include silicon oxide. In addition, the third material layer 113 may include titanium oxide or titanium nitride. Here, silicon may have a refractive index of about 3.0 or greater, silicon oxide may have a refractive index of about 1.4 to 1.5, and titanium oxide or titanium nitride may have a refractive index of about 1.9 to 3.0.

The second Bragg reflective layer 120 may have a structure, in which at least one first material layer 121, at least one second material layer 122, and at least one third material layer 123 are stacked in a vertical direction, similar to the first Bragg reflective layer 110. FIG. 2 shows an example of a structure of the second Bragg reflective layer, in which three first material layers 121 and two second material layers 122 are alternately stacked in the vertical direction on a lower surface of the third material layer 123, but embodiments are not limited thereto. For example, the number and arrangement of the first to third material layers 121, 122, and 123 may be variously modified.

The first to third material layers 121, 122, and 123 may have materials having different refractive indices from one another. For example, the first material layer 121 may have a maximum refractive index and the second material layer 122 may have a minimum refractive index. In addition, a refractive index of the third material layer 123 may be less than that of the first material layer 121 and greater than that of the second material layer 122. For example, the first material layer 121 may include silicon and the second material layer 122 may include silicon oxide. In addition, the third material layer 123 may include titanium oxide or titanium nitride.

In the example embodiment, the first and second Bragg reflective layers 110 and 120 respectively include three material layers, that is, the first material layers 111 and 121, the second material layers 112 and 122, and the third material layers 113 and 123, and thus a width of a wavelength band of light passing through the bandpass filter 100, for example, full width at half maximum (FWHM) may be adjusted to have a desired value.

In a bandpass filter according to the related art, two first and second material layers that have different refractive indices from each other which are alternately stacked are used as the Bragg reflective layer. Here, the width of the wavelength band of light is determined by adjusting the numbers of first and second material layers. For example, when the number of each of the first and second material layers is n, the width of the wavelength band of light may be w1. In addition, when the number of each of the first and second material layers is n+1, the width of the wavelength band of light may be w2. Therefore, in the bandpass filter according to the related art, the wavelength band of light having a width between w1 and w2 may not be implemented.

In the example embodiment, the first and second Bragg reflective layers 110 and 120 in the bandpass filter 100 respectively include three material layers, for example, the first material layers 111 and 121, the second material layers 112 and 122, and the third material layers 113 and 123 having different refractive indices from one another. Thus, the wavelength band of light having a width between w1 and w2 may be implemented.

FIG. 3 is a diagram showing transmission spectrums of a bandpass filter according to the related art and transmission spectrums of the bandpass filter unit 1O0 of FIG. 2. Here, the first and second material layers in the Bragg reflective layer in the bandpass filter according to the related art include silicon and silicon oxide, and the first to third material layers included in the first and second Bragg reflective layers 110 and 120 of the bandpass filter 100 shown in FIG. 2 according to the example embodiment include silicon, silicon oxide, and titanium oxide.

In FIG. 3, A denotes a transmission spectrum in a case in which the wavelength band of light has a width w1 when the number of each of the first and second material layers is n in the bandpass filter according to the related art. In addition, B denotes a transmission spectrum in a case in which the wavelength band of light has a width w2 (<w1) when the number of each of the first and second material layers is n+1 in the bandpass filter according to the related art. Also, C denotes a transmission spectrum in a case in which the wavelength band of light has a width w (w2<w<w1) in the bandpass filter 100 according to the example embodiment illustrated with reference to FIG. 2. As shown in FIG. 3, in the bandpass filter 100 according to the example embodiment, the first and second Bragg reflective layers 110 and 120 respectively include three material layers, that is, the first material layers 111 and 121, the second material layers 112 and 122, and the third material layers 131 and 132 having different refractive indices from one another. Thus, the wavelength band of light having a width between w1 and w2 may be implemented.

In the above description, the first and second Bragg reflective layers 110 and 120 respectively include three material layers having different refractive indices from one another. However, embodiments are not limited thereto. For example, each of the first and second Bragg reflective layers 110 and 120 may include four or more material layers having different refractive indices from one another.

As described above, since the first and second Bragg reflective layers 110 and 120 respectively include three or more material layers having different refractive indices from one another, the width of the wavelength band of light passing through the bandpass filter 100 may be variously adjusted.

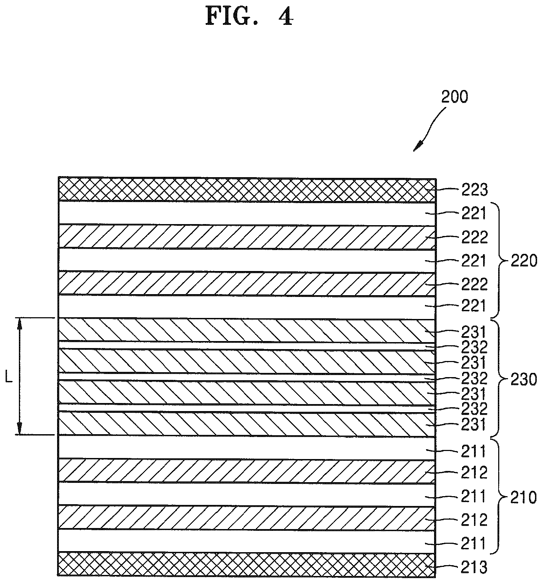

FIG. 4 is a cross-sectional view of a bandpass filter 200 according to an example embodiment.

Referring to FIG. 4, the bandpass filter 200 includes first and second Bragg reflective layers 210 and 220, and a cavity layer 230 between the first Bragg reflective layer 210 and the second Bragg reflective layer 220, where the first and second Bragg reflective layers 210 and 220 are spaced apart from each other.

The cavity layer 230 may include at least one first material layer 231 and at least one second material layers 232 having different refractive indices from each other. Here, the at least one first material layer 231 and the at least one second material layer 232 may be alternately stacked in the vertical direction. FIG. 4 shows an example, in which three first material layers 231 and three second material layers 232 are alternately stacked. However, the number of first material layers 231 and the number of second material layers 232 are not limited thereto, and may be modified variously.

The first and second material layers 231 and 232 may include materials having different refractive indices from each other. For example, the first material layer 231 may include silicon and the second material layer 232 may include silicon oxide. However, embodiments are not limited thereto. For example, the first and second material layers 231 and 232 may include various other materials.

In the above description, the cavity layer 230 includes two material layers. For example, the first and second material layers 231 and 232 having different refractive indices from each other and being stacked in the vertical direction are included in the cavity layer 230. However, embodiments are not limited thereto. For example, the cavity layer 230 may include three or more material layers having different refractive indices from one another and being stacked in the vertical direction.

The cavity layer 230 may have a thickness L that is greater than λ/n, where, λ denotes a center wavelength of the bandpass filter 100 and n denotes an effective refractive index of the cavity layer 130. As described above, when the thickness L of the cavity layer 230 is greater than λ/n, the light of a desired intensity having a certain center wavelength may be transmitted even when the light is incident to the bandpass filter 200 at various angles.

The first and second Bragg reflective layers 210 and 220 are respectively provided on lower and upper surfaces of the cavity layer 230, and each of the first and second Bragg reflective layers 210 and 220 may include three material layers having different refractive indices from one another.

In detail, the first Bragg reflective layer 210 has a structure, in which at least one first material layer 211, at least one second material layer 212, and at least one third material layer 213 are stacked in a vertical direction. However, the number and arrangement of the first to third material layers 211, 212, and 213 may be variously modified. The first to third material layers 211, 212, and 213 may have materials having different refractive indices from one another.

The second Bragg reflective layer 220 may have a structure, in which at least one first material layer 221, at least one second material layer 222, and at least one third material layer 223 are stacked in a vertical direction, similar to the first Bragg reflective layer 210. The number and arrangement of the first to third material layers 221, 222, and 223 may be variously modified. The first to third material layers 221, 222, and 223 may have materials having different refractive indices from one another.

In the above description, the first and second Bragg reflective layers 210 and 220 respectively include three material layers having different refractive indices from one another, but the first and second Bragg reflective layers 210 and 220 may respectively include four or more material layers having different refractive indices from one another. Accordingly, the width of the wavelength band of light passing through the bandpass filter 20O may be variously adjusted.

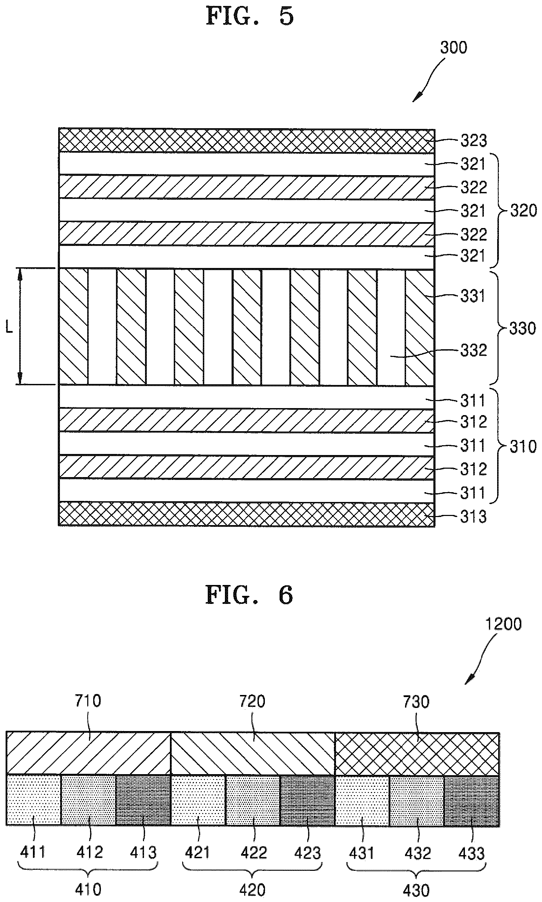

FIG. 5 is a cross-sectional view of a bandpass filter 300 according to an example embodiment.

Referring to FIG. 5, the bandpass filter 300 includes first and second Bragg reflective layers 310 and 320, and a cavity layer 330 between the first Bragg reflective layer 310 and the second Bragg reflective layer 320, where the first and second Bragg reflective layers 310 and 320 are spaced apart from each other.

The cavity layer 330 may include at least one first material layer 331 and at least one second material layers 332 having different refractive indices from each other. For example, the at least one first material layer 331 and the at least one second material layer 332 may be alternately stacked in a horizontal direction. Here, the numbers of first and second material layers 331 and 332 may be variously modified.

The first and second material layers 331 and 332 may include materials having different refractive indices from each other. For example, the first material layer 331 may include silicon and the second material layer 332 may include silicon oxide. However, embodiments are not limited thereto. For example, the first and second material layers 331 and 332 may include various other materials.

In the above description, the cavity layer 330 includes two material layers, that is, the first and second material layers 331 and 332 having different refractive indices from each other and being arranged in the horizontal direction. However, embodiments are not limited thereto, and the cavity layer 330 may include three or more material layers having different refractive indices from one another and being arranged in the horizontal direction.

The cavity layer 330 may have a thickness L that is greater than λ/n, where, λ denotes a center wavelength of the bandpass filter 300 and n denotes an effective refractive index of the cavity layer 330. As described above, when the thickness L of the cavity layer 330 is greater than λ/n, the light of a desired intensity having a certain center wavelength may be transmitted even when the light is incident to the bandpass filter 300 at various angles.

The first and second Bragg reflective layers 310 and 320 are on lower and upper surfaces of the cavity layer 330, and each of the first and second Bragg reflective layers 310 and 320 may include three material layers having different refractive indices from one another.

For example, the first Bragg reflective layer 310 has a structure, in which at least one first material layer 311, at least one second material layer 312, and at least one third material layer 313 are stacked in a vertical direction. However, the number and arrangement of the first to third material layers 311, 312, and 313 may be variously modified. The first to third material layers 311, 312, and 313 may have materials having different refractive indices from one another.

The second Bragg reflective layer 320 may have a structure, in which at least one first material layer 321, at least one second material layer 322, and at least one third material layer 323 are stacked in a vertical direction, similar to the first Bragg reflective layer 310. The number and arrangement of the first to third material layers 321, 322, and 323 may be variously modified. The first to third material layers 321, 322, and 323 may have materials having different refractive indices from one another.

In the above description, the first and second Bragg reflective layers 310 and 320 respectively include three material layers having different refractive indices from one another, but the first and second Bragg reflective layers 310 and 320 may respectively include four or more material layers having different refractive indices from one another. Accordingly, the width of the wavelength band of light passing through the bandpass filter 300 may be variously adjusted.

Hereinafter, examples in which light of a desired wavelength band of light is only incident to the bandpass filter by using an additional filter such as a color filter unit, a wideband filter unit, etc. will be described below.

FIG. 6 is a cross-sectional view of an optical filter 1200 according to an example embodiment.

Referring to FIG. 6, the optical filter 1200 includes a plurality of bandpass filters 411, 412, 413, 421, 422, 423, 431, 432, and 433 and a plurality of color filters 710, 720, and 730 on upper portions of the bandpass filters 411 to 433, wherein the plurality of bandpass filters 411 to 433 having different center wavelengths of light from one another are arranged in a predetermined pattern. Here, each of the plurality of bandpass filters 411 to 433 may include one of the bandpass filters 100, 200, and 300 of the Fabry-Perot structure described in the above example embodiments.

FIG. 6 shows an example, in which nine bandpass filters 411 to 433 having different center wavelengths of light from one another are provided, and three bandpass filters having adjacent peak wavelengths configure one filter array 410, 420, or 430. The number of bandpass filters configuring one filter array 410, 420, or 430 may be variously modified. For example, one bandpass filter may configure one filter array 410, 420, or 430.

The first filter array 410 may include first bandpass filter 411, the second bandpass filter 412, and the third bandpass filter 413 arranged adjacent to one another. The first to third bandpass filters 411, 412, and 413 may have adjacent center wavelengths of light to one another. The first filter array 410 may transmit a first wavelength band of light. Here, the first wavelength band of light may be determined by the wavelength bands of light of the first to third bandpass filters 411, 412, and 413.

The second filter array 420 may include fourth to sixth bandpass filters 421, 422, and 423 arranged adjacent to one another. The fourth to sixth bandpass filters 421, 422, and 423 may have adjacent center wavelengths of light to one another. The second filter array 420 may transmit a second wavelength band of light. Here, the second wavelength band of light may be determined by the wavelength bands of light of the fourth to sixth bandpass filters 421, 422, and 423.

The third filter array 430 may include seventh, eighth, and ninth filters 431, 432, and 433 arranged adjacent to one another. The seventh to ninth bandpass filters 431, 432, and 433 may have adjacent center wavelengths of light to one another. The third filter array 430 may transmit a third wavelength band of light. Here, the third wavelength band of light may be determined by the wavelength bands of light of the seventh to ninth bandpass filters 431, 432, and 433.

For example, when the optical filter 1200 having a wavelength band of light of about 400 nm to 700 nm (visible ray wavelength band of light) is to be manufactured, the first filter array 410 may be a blue filter array that transmits a first wavelength band of light of about 400 nm to 500 nm. Here, the first wavelength band of light of about 400 nm to 500 nm is divided into three bands, which are the wavelength bands of light of the first, second, and third bandpass filters 411, 412, and 413.

The second filter array 420 may be a green filter array that transmits a second wavelength band of light of about 500 nm to 600 nm. Here, the second wavelength band of light of about 500 nm to 600 nm is divided into three bands, which are the wavelength bands of light of the fourth, fifth, and sixth bandpass filters 421, 422, and 423. The third filter array 430 may be a red filter array that transmits a third wavelength band of light of about 600 nm to 700 nm. Here, the third wavelength band of light of about 600 nm to 700 nm is divided into three bands, which are the wavelength bands of light of the seventh, eighth, and ninth bandpass filters 431, 432, and 433.

The plurality of color filters 710, 720, and 730 having different colors are provided on upper portions of the plurality of first to ninth bandpass filters 411 to 433. Here, the plurality of color filters 710, 720, and 730 may block the light of a wavelength band that is not the target of corresponding filter arrays 410, 420, and 430, as described later. The plurality of color filters 710, 720, and 730 may be generally applied to a color display apparatus such as a liquid crystal display apparatus, an organic light-emitting display apparatus, etc.

The plurality of color filters 710, 720, and 730 may correspond to the plurality of first to third filter arrays 410, 420, and 430, respectively. FIG. 6 shows an example, in which three color filters, that is, first to third color filters 710, 720, and 730 correspond to the first to third filter arrays 410, 420, and 430.

The first color filter 710 is provided on an upper portion of the first filter array 410 including the first to third bandpass filters 411, 412, and 413. For example, when the first filter array 410 is the blue filter array transmitting the wavelength band of light of about 400 nm to 500 nm, the first color filter 710 may be a blue color filter that transmits the wavelength band of blue light.

The second color filter 720 is provided on an upper portion of the second filter array 420 including the fourth sixth bandpass filters 421, 422, and 423. For example, when the second filter array 420 is the green filter array transmitting the wavelength band of light of about 500 nm to 600 nm, the second color filter 720 may be a green color filter that transmits the wavelength band of green light.

The third color filter 730 is provided on an upper portion of the third filter array 430 including the seventh to ninth bandpass filters 431, 432, and 433. For example, when the third filter array 430 is the red filter array transmitting the wavelength band of light of about 600 nm to 700 nm, the third color filter 730 may be a red color filter that transmits the wavelength band of red light.

The first, second, and third color filters 710, 720, and 730 may prevent or reduce the light of wavelength bands that are not the targets of the first to third filter arrays 410, 420, 430 from being incident to the first to third filter arrays 410, 420, and 430.

In general, in the bandpass filter of the Fabry-Perot structure, the wavelength band of light passing through the bandpass filter is determined according to reflection bands of the reflective layers and characteristics of the cavity layer. However, the light of another wavelength band, as well as the target wavelength band of light, may also transmit through the bandpass filter due to a low-reflective portion in the reflective layer and influence of the sideband, etc.

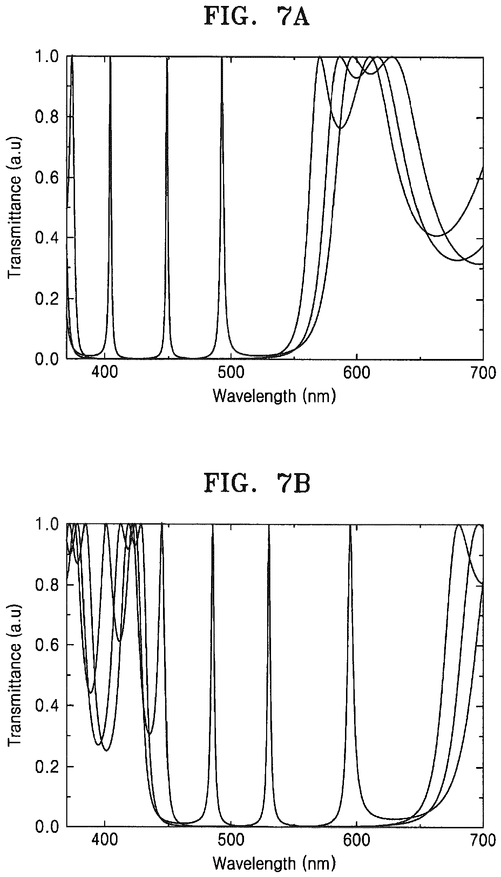

FIG. 7A shows a transmission spectrum of the light passing through the first filter array 410 in a case in which the first filter array 410 including the first to third bandpass filters 411, 412, and 413 of FIG. 6 is manufactured as the blue filter array that transmits light of the wavelength band of about 400 nm to 500 nm. Referring to FIG. 7A, it is understood that the light of other wavelength bands than the blue wavelength band that is the target of the first filter array 410 has passed through the first filter array 410.

FIG. 7B shows a transmission spectrum of the light passing through the second filter array 420 in a case in which the second filter array 420 including the fourth to sixth bandpass filters 421, 422, and 423 of FIG. 6 is manufactured as the green filter array that transmits light of the wavelength band of about 500 nm to 600 nm. Referring to FIG. 7B, it is understood that the light of other wavelength bands than the green wavelength band that is the target of the second filter array 420 has passed through the second filter array 420.

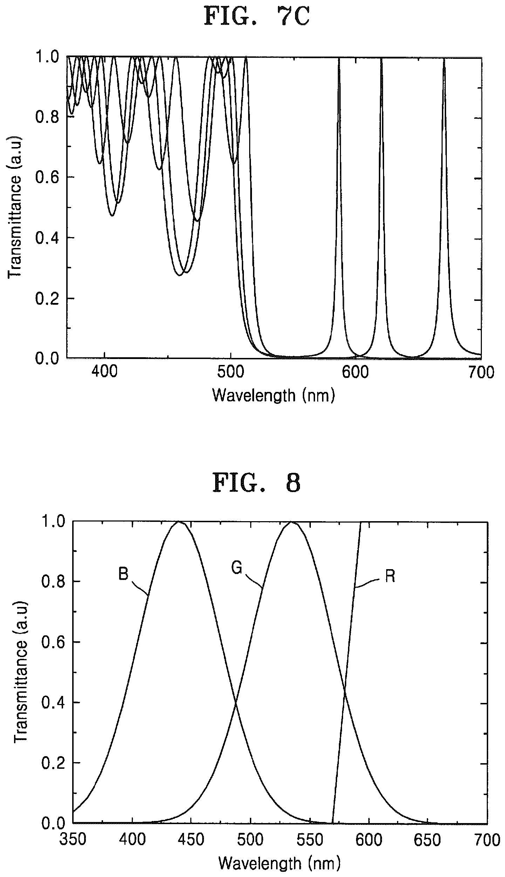

FIG. 7C shows a transmission spectrum of the light passing through the third filter array 430 in a case in which the third filter array 430 including the seventh to ninth bandpass filters 431, 432, and 433 of FIG. 6 is manufactured as the red filter array that transmits light of the wavelength band of about 600 nm to 700 nm. Referring to FIG. 7C, it is understood that the light of other wavelength bands than the red wavelength band that is the target of the third filter array 430 has passed through the third filter array 430.

In the example embodiment, the first color filter 710 provided on the upper portion of the first filter array 410 may block the light of the wavelength band that is not the target of the first filter array 410, for example, light of other wavelength bands than the first wavelength band. In addition, the second color filter 720 provided on the upper portion of the second filter array 420 may block the light of the wavelength band that is not the target of the second filter array 420, for example, light of other wavelength bands than the second wavelength band. In addition, the third color filter 730 provided on the upper portion of the third filter array 430 may block the light of the wavelength band that is not the target of the third filter array 430, for example, light of other wavelength bands than the third wavelength band.

FIG. 8 shows transmission spectrums of the light passing through the first to third color filters 710, 720, and 730 when the first to third color filters 710, 720, and 730 are respectively the blue, green, and red color filters in FIG. 6. In FIG. 8, B, G, and R respectively denote the transmission spectrums of the light passing through the first, second, and third color filters 710, 720, and 730.

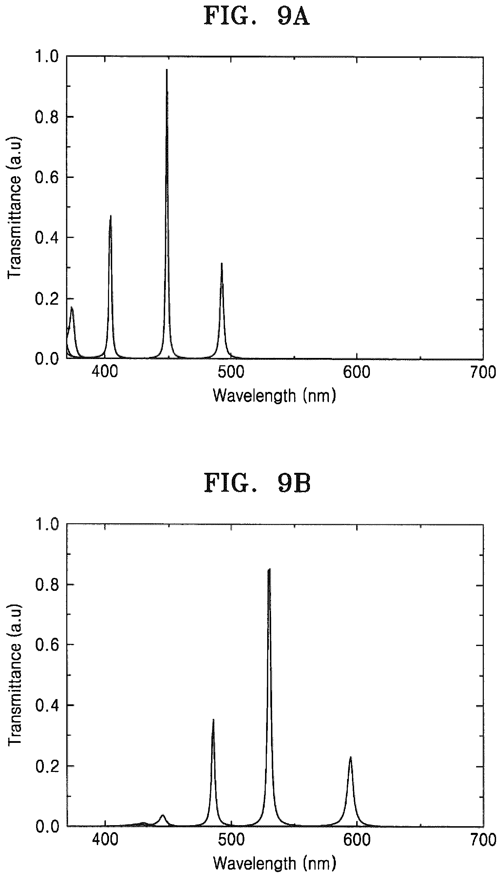

FIG. 9A shows transmission spectrums of the light passing through the first color filter 710 and the first filter array 410 when the first color filter (blue color filter unit) 710 having the transmission spectrums shown in FIG. 8 is provided on the upper portion of the first filter array (blue filter array) 410 having the transmission spectrums shown in FIG. 7A.

Referring to FIG. 9A, the light of other wavelength bands than the blue wavelength bands is blocked by the first color filter 710 and the light of the blue wavelength band is only incident to the first filter array 410, and thus the transmission spectrums of the first wavelength band of light that is the target of the first filter array 410 may be obtained. FIG. 9A shows the transmission spectrums of the first to third bandpass filters 411, 412, and 413 within the first wavelength band of light of the first filter array 410.

FIG. 9B shows transmission spectrums of the light passing through the second color filter 720 and the second filter array 420 when the second color filter (green color filter unit) 720 having the transmission spectrums shown in FIG. 8 is provided on the upper portion of the second filter array (green filter array) 420 having the transmission spectrums shown in FIG. 7B.

Referring to FIG. 9B, the light of other wavelength bands than the green wavelength bands is blocked by the second color filter 720 and the light of the green wavelength band is only incident to the second filter array 420, and thus the transmission spectrums of the second wavelength band of light that is the target of the second filter array 420 may be obtained. FIG. 9B shows the transmission spectrums of the fourth to sixth bandpass filters 421, 422, and 423 within the second wavelength band of light of the second filter array 420.

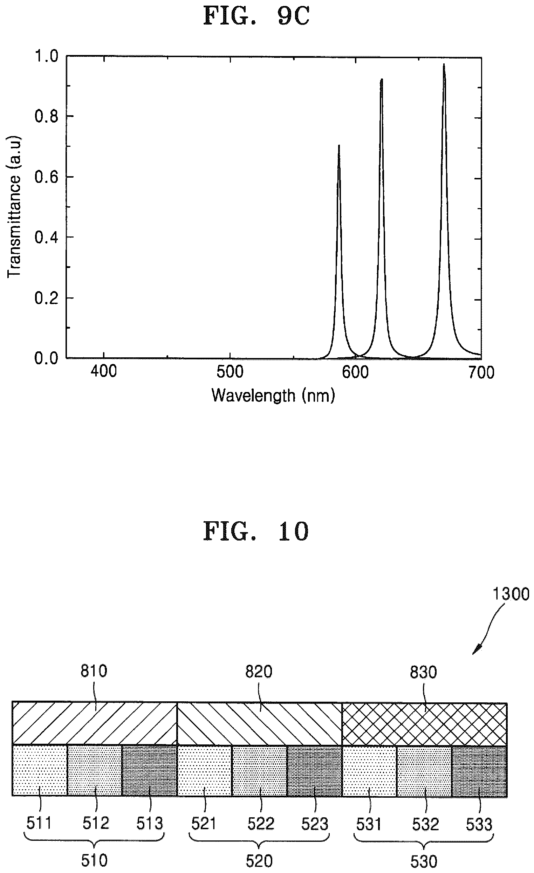

FIG. 9C shows transmission spectrums of the light passing through the third color filter 730 and the third filter array 430 when the third color filter (red color filter unit) 730 having the transmission spectrums shown in FIG. 8 is provided on the upper portion of the third filter array (red filter array) 430 having the transmission spectrums shown in FIG. 7C.

Referring to FIG. 9C, the light of other wavelength bands than the red wavelength bands is blocked by the third color filter 730 and the light of the red wavelength band is only incident to the third filter array 430, and thus the transmission spectrums of the third wavelength band of light that is the target of the third filter array 430 may be obtained. FIG. 9C shows the transmission spectrums of the seventh to ninth filters 431, 432, and 433 within the third wavelength band of light of the third filter array 430.

As described above, in the optical filter 1200 according to the example embodiment, the color filters 710, 720, and 730 that only transmit the light of certain wavelength bands are provided on the bandpass filters 411 to 433 so that the light of the desired wavelength bands may be only incident to the bandpass filters 411 to 433, and accordingly, the spectroscopy performance may be improved.

FIG. 10 is a cross-sectional view of an optical filter 1300 according to an example embodiment.

Referring to FIG. 10, the optical filter 1300 includes a plurality of, bandpass filters 511, 512, 513, 521, 522, 523, 531, 532, and 533 and a plurality of wideband filters 810, 820, and 830 on upper portions of the bandpass filters 511 to 533, wherein the plurality of bandpass filters 511 to 533 having different center wavelengths of light from one another are arranged in a predetermined pattern. Here, the plurality of bandpass filters 511 to 533 are the same as the plurality of bandpass filters 411 to 433 shown in FIG. 6.

FIG. 10 shows an example, in which nine bandpass filters 511 to 533 having different center wavelengths of light from one another are provided, and three bandpass filters having adjacent center wavelengths of light configure one filter array 510, 520, or 530.

The first filter array 510 may include the first to third bandpass filters 511, 512, and 513, and may transmit the light of first wavelength band. The second filter array 520 may include the fourth to sixth bandpass filters 521, 522, and 523, and may transmit the light of second wavelength band. The third filter array 530 may include the seventh to ninth bandpass filters 531, 532, and 533, and may transmit the light of third wavelength band.

The plurality of wideband filters 810, 820, and 830 are provided on upper portions of the plurality of bandpass filters 511 to 533. Here, each of the wideband filters 810, 820, and 830 may only transmit the light of a certain wavelength band.

The first wideband filter 810 is provided on an upper portion of the first filter array 510. The first wideband filter 810 may block the light of other wavelength bands than the first wavelength band that is the target of the first filter array 510. For example, when the first filter array 510 is the blue filter array transmitting the wavelength band of light of about 400 nm to 500 nm, the first wideband filter 810 may be a blue filter that transmits the wavelength band of blue light.

The second wideband filter 820 is provided on an upper portion of the second filter array 520. The second wideband filter 820 may block the light of other wavelength bands than the second wavelength band that is the target of the second filter array 520. For example, when the second filter array 520 is the green filter array transmitting the wavelength band of light of about 500 nm to 600 nm, the second wideband filter 820 may be a green filter that transmits the wavelength band of green light.

The third wideband filter 830 is provided on an upper portion of the third filter array 530. The third wideband filter 830 may block the light of other wavelength bands than the third wavelength band that is the target of the third filter array 530. For example, when the third filter array 530 is the red filter array transmitting the wavelength band of light of about 600 nm to 700 nm, the third wideband filter 830 may be a red filter that transmits the wavelength band of red light.

Each of the wideband filters 810, 820, and 830 may have, for example, a multi-cavity structure or a metal mirror structure.

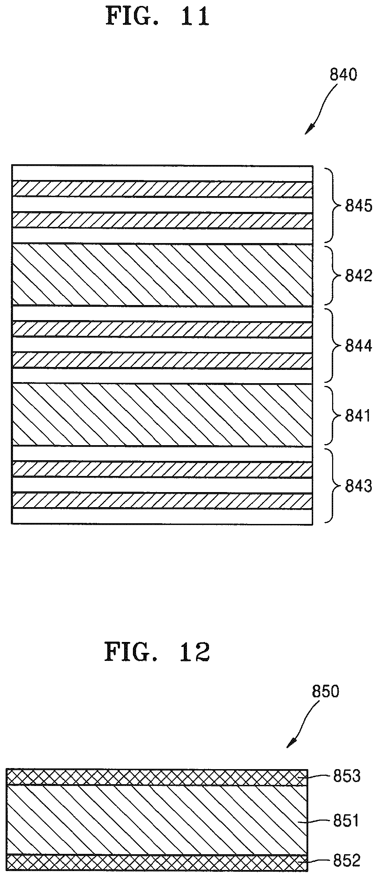

FIG. 11 shows an example of a wideband filter 840 of a multi-cavity structure. Referring to FIG. 11, the wideband filter 840 may include a plurality of reflective layers 843, 844, and 845 and a plurality of cavity layers 841 and 842 provided between the reflective layers 843, 844, and 845, wherein the plurality of reflective layers 843, 844, and 845 are spaced apart from one another. FIG. 11 shows three reflective layers 843, 844, and 845 and two cavity layers 841 and 842, but the number of reflective layers and the number of cavity layers may be variously modified.

For example, the first to third reflective layers 843, 844, and 845 are spaced apart from one another, the first cavity layer 841 may be provided between the first and second reflective layers 843 and 844, and the second cavity layer 842 may be provided between the second and third reflective layers 844 and 845.

Each of the first and second cavity layers 841 and 842 may have a material having a predetermined refractive index. Also, each of the first and second cavity layers 841 and 842 may include two or more materials having different refractive indices from each other.

Each of the first to third reflective layers 843, 844, and 845 may include a Bragg reflective layer. Each of the first to third reflective layers 843, 844, and 845 may have, for example, a structure in which a plurality of material layers having different refractive indices from one another are alternately stacked.

FIG. 12 shows an example of a wideband filter 850 having a metal mirror structure. Referring to FIG. 12, the wideband filter 850 may include first and second metal mirror layers 852 and 853 and a cavity layer 851 provided between the first and second metal mirror layers 852and 853.

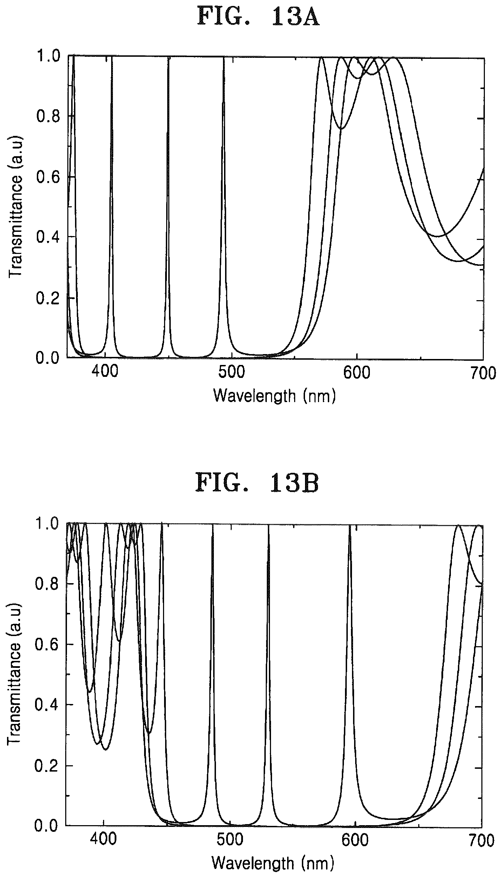

FIGS. 13A to 13C show transmission spectrums of the light passing through the first to third filter arrays 510, 520, and 530 of FIG. 10, as in FIGS. 7A to 7C.

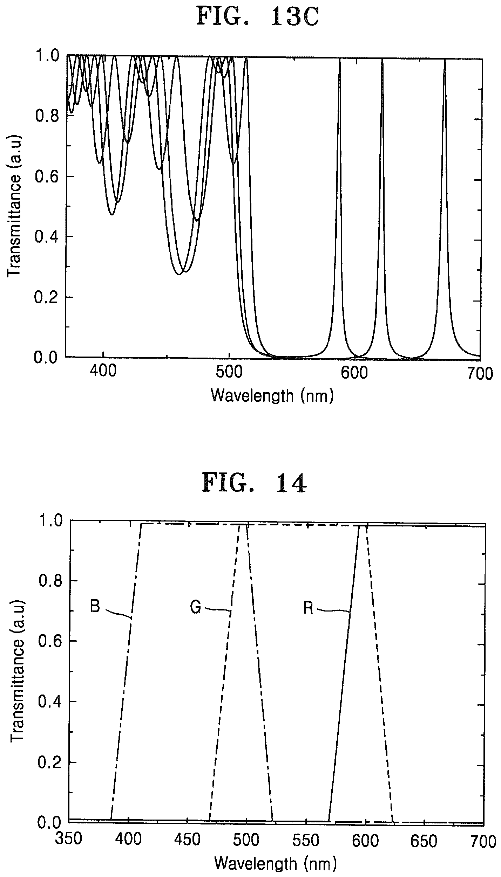

FIG. 13A shows transmission spectrums of the light passing through the first filter array 510 in a case in which the first filter array 510 including the first to third bandpass filters 511, 512, and 513 of FIG. 10 is manufactured as the blue filter array that transmits the wavelength band of light of about 400 nm to 500 nm. FIG. 13B shows transmission spectrums of the light passing through the second filter array 520 in a case in which the second filter array 520 including the fourth to sixth bandpass filters 521, 522, and 523 of FIG. 10 is manufactured as the green filter array that transmits the wavelength band of light of about 500 nm to 600 nm. FIG. 13C shows a transmission spectrum of the light passing through the third filter array 530 in a case in which the third filter array 530 including the seventh to ninth bandpass filters 531, 532, and 533 of FIG. 10 is manufactured as the red filter array that transmits the wavelength band of light of about 600 nm to 700 nm. Referring to FIGS. 13A to 13C, it is understood the light of other wavelength bands than the wavelength bands that are the targets of the filter arrays has passed through the filter arrays.

FIG. 14 shows transmission spectrums of the light passing through the first to third wideband filters 810, 820, and 830 when the first to third wideband filters 810, 820, and 830 are respectively the blue, green, and red filters in FIG. 10. Here, the wideband filter having a multi-cavity structure is used as the wideband filter unit. In FIG. 14, B, G, and R respectively denote the transmission spectrums of the light passing through the first, second, and third wideband filters 810, 820, and 830.

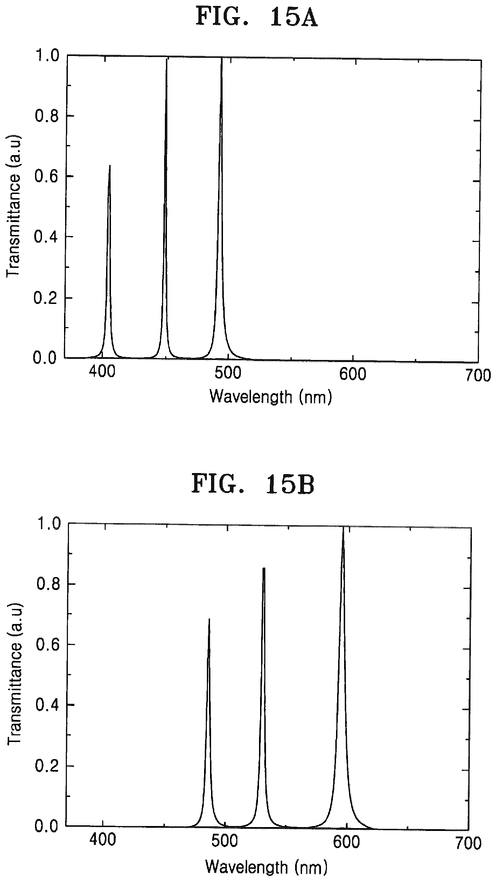

FIG. 15A shows transmission spectrums of the light passing through the first wideband filter 810 and the first filter array 510 when the first wideband filter (blue filter unit) 810 having the transmission spectrums shown in FIG. 14 is provided on the upper portion of the first filter array (blue filter array) 510 having the transmission spectrums shown in FIG. 13A. Referring to FIG. 15A, the light of other wavelength bands than the blue wavelength bands is blocked by the first wideband filter 810 and the light of the blue wavelength band is only incident to the first filter array 510, and thus the transmission spectrums of the first wavelength band of light that is the target of the first filter array 510 may be obtained.

FIG. 15B shows transmission spectrums of the light passing through the second wideband filter 820 and the second filter array 520 when the second wideband filter (green filter unit) 820 having the transmission spectrums shown in FIG. 14 is provided on the upper portion of the second filter array (green filter array) 520 having the transmission spectrums shown in FIG. 13B. Referring to FIG. 15B, the light of other wavelength bands than the green wavelength bands is blocked by the second wideband filter 820 and the light of the green wavelength band is only incident to the second filter array 520, and thus the transmission spectrums of the second wavelength band of light that is the target of the second filter array 520 may be obtained.

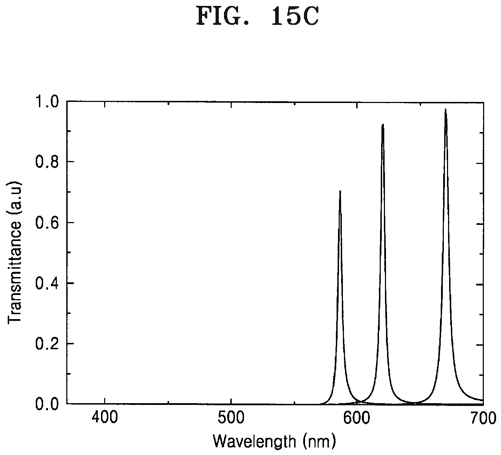

FIG. 15C shows transmission spectrums of the light passing through the third wideband filter 830 and the third filter array 530 when the third wideband filter (red filter unit) 830 having the transmission spectrums shown in FIG.14 is provided on the upper portion of the third filter array (red filter array) 530 having the transmission spectrums shown in FIG. 13C. Referring to FIG. 15C, the light of other wavelength bands than the red wavelength bands is blocked by the third wideband filter 830 and the light of the red wavelength band is only incident to the third filter array 530, and thus the transmission spectrums of the third wavelength band of light that is the target of the third filter array 530 may be obtained.

As described above, the wideband filters 810, 820, and 830 that only transmit the light of certain wavelength bands are provided on the bandpass filters 511 to 533, and thus the light of desired wavelength bands may be only incident to the bandpass filters 511 to 533 and the spectroscopy performance may be improved.

According to the example embodiments, since the Bragg reflective layer includes three or more material layers having different refractive indices from one another, the width of the wavelength band of light passing through the bandpass filter may be variously adjusted. In addition, since the cavity layer in the bandpass filter has a thickness greater than λ/n, where, A denotes a center wavelength of the bandpass filter and n denotes an effective refractive index of the cavity layer, dependency on the light incident angle may be reduced, and accordingly, the light having a certain center wavelength of a desired intensity may be transmitted even when the light is incident to the bandpass filter at various angles.

In addition, the color filters that only transmit the light of certain wavelength bands are provided on the bandpass filters so that the light of the desired wavelength band may be incident to the bandpass filters, and accordingly, the spectroscopy performance may be improved.

It should be understood that embodiments described herein should be considered in a descriptive sense only and not for purposes of limitation. Descriptions of features or aspects within each embodiment should typically be considered as available for other similar features or aspects in other embodiments.

While example embodiments have been described with reference to the figures, it will be understood by those of ordinary skill in the art that various changes in form and details may be made therein without departing from the scope as defined by the following claims; the invention being solely defined by the appended claims.

## Claims

1. An optical filter (1100, 1200, 1300) comprising:
a plurality of bandpass filters (100, 200, 300) having center wavelengths of light that are different from one another,
wherein each of the plurality of bandpass filters comprises:
a cavity layer (130, 230, 330);
a first Bragg reflective layer (110) provided on an upper surface of the cavity layer; the upper surface being the surface from which light is incident to the cavity layer (130, 230, 330) and
a second Bragg reflective layer (120) provided on a lower surface of the cavity layer opposite to the upper surface, and
wherein the cavity layer has a thickness greater than λ/n, where λ is a center wavelength of light of each of the plurality of bandpass filters and n is an effective refractive index of the cavity layer;
wherein each of the first Bragg reflective layer and the second Bragg reflective layer comprises three or more material layers having different refractive indices from one another;
wherein the optical filter further comprising a plurality of additional filters provided on the plurality of bandpass filters, the plurality of additional filters being configured to transmit light of certain wavelength bands, respectively;
wherein two or more adjacent bandpass filters among the plurality of bandpass filters are included in a filter array, and
wherein each of the plurality of additional filters is provided on an upper portion of a respective filter array.

2. The optical filter of claim 1, wherein the plurality of additional filters comprise a plurality of color filters or a plurality of wideband filters.

3. The optical filter of claim 1, wherein the cavity layer comprises one material layer or a plurality of material layers having different refractive indices from one another.

4. The optical filter of claim 3, wherein the plurality of material layers are arranged horizontally or vertically.

5. The optical filter of claim 3, wherein the plurality of material layers are arranged one-dimensionally or two-dimensionally.

6. The optical filter of claim 3, wherein the plurality of material layers comprise a first material layer and a second material layer that are alternately provided horizontally, and a refractive index of the first material layer is different from a refractive index of the second material layer.

7. The optical filter of claim 3, wherein the plurality of material layers comprise a first material layer and a second material layer that are alternately provided vertically, and a refractive index of the first material layer is different from a refractive index of the second material layer.

8. The optical filter of one of claims 1 and 3 to 8, wherein each of the first Bragg reflective layer and the second Bragg reflective layer comprises a first material layer comprising silicon, a second material layer comprising silicon oxide, and a third material layer comprising titanium oxide or titanium nitride.

9. The optical filter of claim 2, wherein the plurality of additional filters comprise a plurality of color filters.

10. The optical filter of claim 2, wherein the plurality of additional filters comprise a plurality of wideband filters, preferably,
wherein each of the plurality of wideband filters has a multi-cavity structure or a metal mirror structure.

11. A spectrometer comprising:
an optical filter according to one of claims 1 to 10; and
a sensing device configured to receive light transmitted through the optical filter.

12. The spectrometer of claim 11, wherein the sensing device comprises an image sensor or a photodiode.

## Patentansprüche

1. Ein optischer Filter (1100, 1200, 1300) umfassend:
eine Vielzahl von Bandpassfiltern (100, 200, 300) mit voneinander verschiedenen mittleren Wellenlängen von Licht,
wobei jeder der Vielzahl von Bandpassfiltern umfasst:
eine Hohlraumschicht (130, 230, 330);
eine erste Bragg-reflektierende Schicht (110), die auf einer oberen Fläche der Hohlraumschicht vorgesehen ist; wobei die obere Fläche die Fläche ist, von der Licht auf die Hohlraumschicht (130, 230, 330) einfällt; und
eine zweite Bragg-reflektierende Schicht (120), die auf einer unteren Fläche der Hohlraumschicht gegenüber der oberen Fläche vorgesehen ist, und
wobei die Hohlraumschicht eine Dicke von mehr als λ/n hat, wobei λ eine mittlere Wellenlänge des Lichts jedes der Vielzahl von Bandpassfiltern ist und n ein effektiver Brechungsindex der Hohlraumschicht ist;
wobei die erste Bragg-reflektierende Schicht und die zweite Bragg-reflektierende Schicht jeweils drei oder mehr Materialschichten mit voneinander verschiedenen Brechungsindizes umfassen;
wobei der optische Filter ferner eine Vielzahl zusätzliche Filter umfasst, die auf der Vielzahl von Bandpassfiltern vorgesehen sind, wobei die Vielzahl zusätzlicher Filter dazu konfiguriert ist, jeweils Licht bestimmter Wellenlängenbänder zu übertragen;
wobei zwei oder mehr benachbarte Bandpassfilter unter der Vielzahl von Bandpassfiltern in einer Filteranordnung enthalten sind, und
wobei jeder der Vielzahl zusätzlicher Filter an einem oberen Teil einer jeweiligen Filteranordnung vorgesehen ist.

2. Optischer Filter nach Patentanspruch 1, wobei die Vielzahl zusätzlicher Filter eine Vielzahl von Farbfiltern oder eine Vielzahl von Breitbandfiltern umfasst.

3. Optischer Filter nach Patentanspruch 1, wobei die Hohlraumschicht eine Materialschicht oder eine Vielzahl von Materialschichten mit voneinander verschiedenen Brechungsindizes umfasst.

4. Optischer Filter nach Patentanspruch 3, wobei die Vielzahl von Materialschichten horizontal oder vertikal angeordnet sind.

5. Optischer Filter nach Patentanspruch 3, wobei die Vielzahl von Materialschichten eindimensional oder zweidimensional angeordnet sind.

6. Optischer Filter nach Patentanspruch 3, wobei die Vielzahl von Materialschichten eine erste Materialschicht und eine zweite Materialschicht umfassen, die abwechselnd horizontal angeordnet sind, und wobei sich ein Brechungsindex der ersten Materialschicht von einem Brechungsindex der zweiten Materialschicht unterscheidet.

7. Optischer Filter nach Patentanspruch 3, wobei die Vielzahl von Materialschichten eine erste Materialschicht und eine zweite Materialschicht umfassen, die abwechselnd vertikal angeordnet sind, und wobei sich ein Brechungsindex der ersten Materialschicht von einem Brechungsindex der zweiten Materialschicht unterscheidet.

8. Optischer Filter nach einem der Patentansprüche 1 und 3 bis 8, wobei sowohl die erste Bragg-reflektierende Schicht als auch die zweite Bragg-reflektierende Schicht eine erste Materialschicht, die Silizium umfasst, eine zweite Materialschicht, die Siliziumoxid umfasst, und eine dritte Materialschicht, die Titanoxid oder Titannitrid umfasst, umfassen.

9. Optischer Filter nach Patentanspruch 2, wobei die Vielzahl zusätzlicher Filter eine Vielzahl von Farbfiltern umfasst.

10. Optischer Filter nach Patentanspruch 2, wobei die Vielzahl zusätzlicher Filter eine Vielzahl von Breitbandfiltern umfasst,
wobei jedes der Vielzahl von Breitbandfiltern vorzugsweise eine Mehrfach-Hohlraumstruktur oder eine Metallspiegelstruktur aufweist.

11. Ein Spektrometer umfassend:
einen optischen Filter nach einem der Patentansprüche 1 bis 10; und
eine Sensorvorrichtung, die dazu konfiguriert ist, das durch den optischen Filter übertragene Licht zu empfangen.

12. Spektrometer nach Patentanspruch 11, wobei die Sensorvorrichtung einen Bildsensor oder eine Fotodiode umfasst.

## Revendications

1. Filtre optique (1100, 1200, 1300) comprenant :
une pluralité de filtres passe-bande (100, 200, 300) dont les longueurs d'onde centrales de la lumière sont différentes les unes des autres,
dans lequel chacun de la pluralité de filtres passe-bande comprend :
une couche de cavité (130, 230, 330) ;
une première couche réfléchissante de Bragg (110) placée sur une surface supérieure de la couche de cavité ; la surface supérieure étant la surface à partir de laquelle la lumière est incidente sur la couche de cavité (130, 230, 330) et
une deuxième couche réfléchissante de Bragg (120) placée sur une surface inférieure de la couche de cavité opposée à la surface supérieure, et
dans lequel la couche de cavité a une épaisseur supérieure à λ/n, où λ est une longueur d'onde centrale de la lumière de chacun de la pluralité de filtres passe-bande et n est un indice de réfraction effectif de la couche de cavité ;
dans lequel chacune de la première couche réfléchissante de Bragg et de la deuxième couche réfléchissante de Bragg comprend au moins trois couches de matériaux ayant des indices de réfraction différents les uns des autres ;
dans lequel le filtre optique comprenant en outre une pluralité de filtres supplémentaires placés sur la pluralité de filtres passe-bande, la pluralité de filtres supplémentaires étant configurée pour transmettre la lumière de certaines bandes de longueur d'onde, respectivement ;
dans lequel deux filtres passe-bande adjacents ou plus parmi la pluralité de filtres passe-bande sont inclus dans un réseau de filtres, et
dans lequel chacun de la pluralité de filtres supplémentaires est placé sur une partie supérieure d'un réseau de filtres.

2. Filtre optique selon la revendication 1, dans lequel la pluralité de filtres supplémentaires comprennent une pluralité de filtres de couleur ou une pluralité de filtres à large bande.

3. Filtre optique selon la revendication 1, dans lequel la couche de cavité comprend une couche de matériau ou une pluralité de couches de matériaux ayant des indices de réfraction différents les uns des autres.

4. Filtre optique selon la revendication 3, dans lequel la pluralité de couches de matériaux est disposée horizontalement ou verticalement.

5. Filtre optique selon la revendication 3, dans lequel la pluralité de couches de matériaux est disposée de manière unidimensionnelle ou bidimensionnelle.

6. Filtre optique selon la revendication 3, dans lequel la pluralité de couches de matériau comprennent une première couche de matériau et une deuxième couche de matériau qui sont alternativement disposées horizontalement, et un indice de réfraction de la première couche de matériau est différent d'un indice de réfraction de la deuxième couche de matériau.

7. Filtre optique selon la revendication 3, dans lequel la pluralité de couches de matériau comprennent une première couche de matériau et une deuxième couche de matériau qui sont alternativement disposées verticalement, et un indice de réfraction de la première couche de matériau est différent d'un indice de réfraction de la deuxième couche de matériau.

8. Filtre optique selon l'une quelconque des revendications 1 et 3 à 8, dans lequel la première couche réfléchissante de Bragg et la deuxième couche réfléchissante de Bragg comprend chacune une première couche de matériau comprenant du silicium, une deuxième couche de matériau comprenant de l'oxyde de silicium, et une troisième couche de matériau comprenant de l'oxyde de titane ou du nitrure de titane.

9. Filtre optique selon la revendication 2, dans lequel la pluralité de filtres supplémentaires comprennent une pluralité de filtres de couleur.

10. Filtre optique selon la revendication 2, dans lequel la pluralité de filtres supplémentaires comprennent une pluralité de filtres à large bande, de préférence,
dans lequel chacun de la pluralité de filtres à large bande a une structure à plusieurs cavités ou une structure à miroir métallique.

11. Spectromètre comprenant :
un filtre optique selon l'une des revendications 1 à 10 ; et
un dispositif de détection configuré pour recevoir la lumière transmise à travers le filtre optique.

12. Spectromètre selon la revendication 11, dans lequel le dispositif de détection comprend un capteur d'image ou une photodiode.
